(19)

Europäisches
Patentamt
European
Patent Office
Office européen
des brevets

(11) **EP 4 116 884 A2**

(12) **EUROPEAN PATENT APPLICATION**

(43) Date of publication:
**11.01.2023 Bulletin 2023/02**

(21) Application number: **22208688.6**

(22) Date of filing: **22.11.2022**

(51) International Patent Classification (IPC):
**G06N 3/04** *(2006.01)* **G06N 3/08** *(2006.01)*
**G06N 5/02** *(2006.01)* **G06N 5/04** *(2006.01)*

(52) Cooperative Patent Classification (CPC):
**G06N 3/0454; G06N 3/08; G06N 5/022;** G06N 5/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 CN 202111446672**

(71) Applicant: **Beijing Baidu Netcom
Science Technology Co., Ltd.
Beijing 100085 (CN)**

(72) Inventors:
- LUO, Jinchang
  **Beijing, 100085 (CN)**
- WANG, Haiwei
  **Beijing, 100085 (CN)**
- BU, Junzhao
  **Beijing, 100085 (CN)**
- CHEN, Kunbin
  **Beijing, 100085 (CN)**
- HE, Wei
  **Beijing, 100085 (CN)**

(74) Representative: **Maiwald GmbH
Elisenhof
Elisenstraße 3
80335 München (DE)**

(54) **METHOD AND APPARATUS FOR TRAINING TAG RECOMMENDATION MODEL, AND METHOD AND APPARATUS FOR OBTAINING TAG**

(57) The disclosure provides a method for training a tag recommendation model. The method includes: collecting training materials that comprise interest tags in response to receiving an instruction for collecting training materials; obtaining training semantic vectors that comprise the interest tags by representing features of the training materials using a semantic enhanced representation frame; obtaining training encoding vectors by aggregating social networks into the training semantic vectors; and obtaining a tag recommendation model by training a double-layer neural network structure using the training encoding vectors as inputs and the interest tags as outputs. Therefore, the interest tags obtained in the disclosure are more accurate.

EP 4 116 884 A2

**Description**

## TECHNICAL FIELD

The disclosure relates to the technical field of data processing, especially to, the technical field of deep learning, cloud service, and content search, in particular to, a method for training a tag recommendation model, an apparatus for training a tag recommendation model, a method for obtaining a tag, and an apparatus for obtaining a tag.

## BACKGROUND

Interest profiles include two kinds of technical solution, i.e., rule-based technical solutions and technical solutions based on conventional models. Attribute profiles include fixed attributes such as age and gender, which are easy and convenient to obtain. Interest profiles represent interests, such as preferences, skills, and habits. The characteristics of the two kinds of technical solution are features, and text is often used to represent features.

## SUMMARY

According to a first aspect of the disclosure, a method for training a tag recommendation model is provided. The method includes: collecting training materials that include interest tags in response to receiving an instruction for collecting training materials; obtaining training semantic vectors that include the interest tags by representing features of the training materials using a semantic enhanced representation frame; obtaining training encoding vectors by aggregating social networks into the training semantic vectors; and obtaining a tag recommendation model by training a double-layer neural network structure using the training encoding vectors as inputs and the interest tags as outputs.

According to a second aspect of the disclosure, a method for obtaining a tag is provided. The method includes: obtaining materials in response to receiving an instruction for obtaining an interest tag; obtaining semantic vectors that include interest tags by representing features of the materials using a semantic enhanced representation frame; obtaining encoding vectors by aggregating social networks into the semantic vectors; and obtaining the interest tags by inputting the encoding vectors into a pre-trained tag recommendation model.

According to a third aspect of the disclosure, an apparatus for training a tag recommendation model is provided. The apparatus includes: an obtaining module, a processing module, and a training module. The obtaining module is configured to collect training materials that include interest tags in response to receiving an instruction for collecting training materials. The processing module is configured to obtain training semantic vectors that include the interest tags by representing features of the training materials using a semantic enhanced representation frame, and obtain training encoding vectors by aggregating social networks into the training semantic vectors. The training module is configured to obtain a tag recommendation model by training a double-layer neural network structure using the training encoding vectors as inputs and the interest tags as outputs.

According to a fourth aspect of the disclosure, an apparatus for obtaining a tag is provided. The apparatus includes: an obtaining module, a processing module, and a predicting module. The obtaining module is configured to obtain materials in response to receiving an instruction for obtaining an interest tag. The processing module is configured to obtain semantic vectors that include interest tags by representing features of the materials using a semantic enhanced representation frame, and obtain encoding vectors by aggregating social networks into the semantic vectors. The predicting module is configured to obtain the interest tags by inputting the encoding vectors into a pre-trained tag recommendation model.

According to a fifth aspect of the disclosure, an electronic device is provided. The electronic device includes at least one processor and a memory communicatively coupled to the at least one processor. The memory stores instructions executable by the at least one processor, and when the instructions are executed by the at least one processor, the at least one processor is caused to implement the method of the first aspect of the disclosure or the method of the second aspect of the disclosure.

According to a sixth aspect of the disclosure, a non-transitory computer-readable storage medium storing computer instructions is provided. The computer instructions are configured to cause a computer to implement the method of the first aspect of the disclosure or the method of the second aspect of the disclosure.

According to a seventh aspect of the disclosure, a computer program product including computer programs is provided. When the computer programs are executed by a processor, the method of the first aspect of the disclosure or the method of the second aspect of the disclosure is implemented.

Preferred embodiments are defined in the dependent claims.

It should be understood that the content described in this section is not intended to identify key or important features of embodiments of the disclosure, nor is it intended to limit the scope of the disclosure. Additional features of the disclosure will be easily understood based on the following description.

## BRIEF DESCRIPTION OF THE DRAWINGS

The drawings are used to better understand the solutions and do not constitute a limitation to the disclosure, in which:

FIG. 1 is a flowchart of a method for training a tag recommendation model according to some embodiments of the disclosure.

FIG. 2 is a flowchart of a method for determining training semantic vectors according to some embodiments of the disclosure.

FIG. 3 is a schematic diagram of a semantic vector representation according to some embodiments of the disclosure.

FIG. 4 is a flowchart of a method for determining training encoding vectors according to some embodiments of the disclosure.

FIG. 5 is a flowchart of a method for training a model according to some embodiments of the disclosure.

FIG. 6 is a schematic diagram of a neural network according to some embodiments of the disclosure.

FIG. 7 is a flowchart of a method for training a tag recommendation model according to some embodiments of the disclosure.

FIG. 8 is a flowchart of a method for obtaining a tag according to some embodiments of the disclosure.

FIG. 9 is a flowchart of a method for using a tag recommendation model according to some embodiments of the disclosure.

FIG. 10 is a flowchart of a method for obtaining a tag according to some embodiments of the disclosure.

FIG. 11 is a schematic diagram of an apparatus for training a tag recommendation model according to some embodiments of the disclosure.

FIG. 12 is a schematic diagram of an apparatus for obtaining a tag according to some embodiments of the disclosure.

FIG. 13 is a block diagram of an electronic device used to implement some embodiments of the disclosure.

## DETAILED DESCRIPTION

The following describes embodiments of the disclosure with reference to the accompanying drawings, which includes various details of embodiments of the disclosure to facilitate understanding, and shall be considered merely exemplary. For clarity and conciseness, descriptions of well-known functions and structures are omitted in the following description.

Tags are widely applied in various products such as personalized recommendation, search, and advertisement click-through rate estimation, and are used to obtain accurate interest preferences, usage habits and demographic attributes based on interest profiles. The user's experience and benefits for the product can be improved through the profiles.

General tags can be divided into attribute tags and interest tags. The attribute tags are used to represent fixed attributes such as age, gender, and graduate school. The interest tags may include preferences, possessed skills, and habits. The interest tags are not only widely used, but also reflect the individual effect for people, so as to improve the accuracy of services.

However, in the actual process, interests and hobbies are implicit and are generally difficult to collect or predict based on rules, and it is even difficult for users to accurately describe their own interests and hobbies. In this case, how to accurately obtain interests and hobbies, and how to accurately obtain interest tags has become key issues at present.

In the related art, general rules or conventional models are used in the method for obtaining interest tags. For example, in the general rules, users are marked with relevant tags based on artificially defined rules. For example, in an enterprise office scenario, if the user mentions "deep learning" many times in the weekly report, the user is marked with the interest tag "deep learning", and if the user's main work is product design and planning, the user is assigned with the tag of "product manager (PM)". When the user's interest tags are obtained based on conventional models, conventional model-based methods often convert the tag prediction task into the multi-classification task for text. For example, the user's materials are collected, the materials may be the user's work content in an office scene and materials or files related to the work content, and the characteristics of the user are obtained from the work content, materials or files related to the work content. It should be noted that the above work content is obtained with the user's permission and consent. The classification models are applied for classification, such as eXtreme Gradient Boosting (XGBoost) and Support Vector Machine (SVM), where each category can be an interest tag.

In the above-mentioned embodiments, if the rule-based methods are adopted, a lot of human resources are consumed to summarize the rules, and generally only simple rules can be sorted out, thus implicit mapping may not be realized. For example, when the user's characteristics have keywords such as text classification, Term Frequency-Inverse Document Frequency (TF-IDF) and ONE-HOT encoding representation, it can be determined that the user is more interested in "natural language processing", but it is difficult to summarize mapping rules between the keywords and the tags. With the continuous change of information over time, the interests of users may change. At this time, the rule-based methods are often outdated, so the effect becomes poor.

If the conventional model is used to obtain the user interest profiles, although employees can be marked with interest tags, the effect is often poor. The reasons are provided as follows.

(1) The conventional model has a serious cold start problem, which leads to the failure of user interest profile prediction. The cold start problem refers to lack of user materials, resulting in insufficient characteristic expression capability and poor effect of conventional models. Moreover, there are even cases where part of the users may not be able to collect materials at all, and the conventional models is completely unpredictable at this time.

(2) For the conventional models, one-hot encoding or language model word2vec is generally used to represent user characteristics. However, this kind of language representation model technology can only capture shallow semantic information, and the generalization capability of the model is insufficient.

(3) For the conventional models, the conventional models only use the user's own characteristics as inputs, and do not include additional information such as social networks. Moreover, since the training data set is difficult to collect, the training data set is often small, and the conventional model is prone to overfitting under these two factors.

Based on the above mentioned deficiencies in the related art involved, the disclosure provides a method to realize accurate generation of the user's interest profiles based on the user's social networks and graph neural network technologies, so that a model that can accurately obtain the interest profiles is determined.

The following embodiments will illustrate the disclosure with reference to the accompanying drawings.

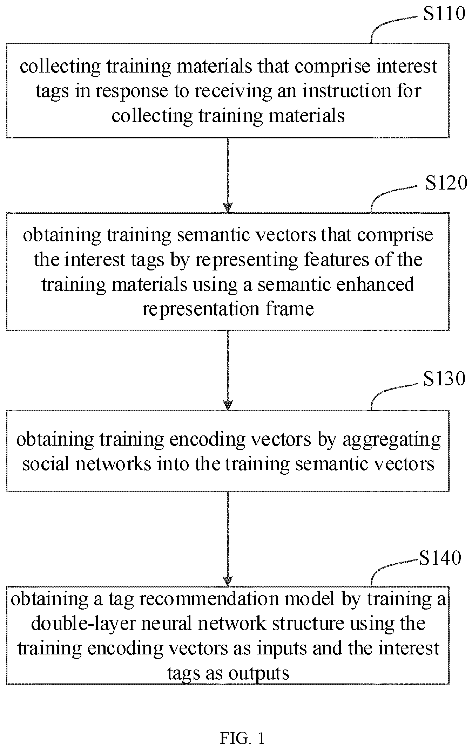

FIG. 1 is a flowchart of a method for training a tag recommendation model according to some embodiments of the disclosure. As illustrated in FIG. 1, the method may include the following.

At block S110, training materials that include interest tags are collected in response to receiving an instruction for collecting training materials.

In some embodiments of the disclosure, it should be noted that the training materials are historical data, and the training materials also include the interest tags. The training materials collected in the disclosure may be materials related to users or other materials, which are not limited herein.

In some embodiments of the disclosure, the training materials can be clicked/collected/read articles. In the disclosure, behavior training materials are collected from behavior logs of knowledge recommendation products and search products. Service training materials are collected based on relevant articles written/edited during working. The relevant articles written/edited during working can be weekly reports, promotion materials, project summaries, and requirements documents. The service training materials can be service-related information, for example, code distribution (C++ 90%, Python 10%) submitted during working.

By collecting materials from multiple sources, it is possible to obtain implicit feedback (i.e., behavioral training materials) such as logs, and real and credible materials such as office materials, and service training materials, so as to obtain comprehensive materials. In this way, coverage and accuracy of the materials are ensured, and lack of materials can be effectively addressed, to accurately represent features of the materials in the following processes.

At block S120, training semantic vectors that include the interest tags are obtained by representing features of the training materials using a semantic enhanced representation frame.

In some embodiments of the disclosure, the semantic enhanced representation frame is an Enhanced Representation from kNowledge IntEgration (ERNIE). Semantic representations of the training materials are performed based on the ERNIE, to obtain the training semantic vectors that include the interest tags.

It is noted that the frame combines pre-trained big data with rich knowledge from multiple sources, and through continuous learning techniques, knowledge on vocabulary, structure and semantics is continuously absorbed from massive text data, to achieve continuous evolution of model effects.

At block S130, training encoding vectors are obtained by aggregating social networks into the training semantic vectors.

In some embodiments of the disclosure, social network relations are obtained. For example, social relations can be friends, and online friends can also be called neighbors in the network. The social network relations are aggregated into the training semantic vectors, to strengthen the training semantic vectors, and obtain the training encoding vectors.

At block S140, a tag recommendation model is obtained by training a double-layer neural network structure using the training encoding vectors as inputs and the interest tags as outputs.

In some embodiments of the disclosure, the neural networks can be Deep Neural Networks (DNN) or other kinds of neural networks. In the disclosure, a double-layer DNN structure is generated by taking the neural network as the DNN as an example.

The training encoding vectors are used as the inputs of the double-layer DNN structure, and the interest tags are used as the outputs of the double-layer DNN structure, so that the double-layer neural network structure is trained to obtain the tag recommendation model.

With the method for training a tag recommendation model of some embodiments of the disclosure, the ERNIE is used to represent the training materials semantically, which can make the representations of features of the training materials more accurate. By training the double-layer neural network structure, the coverage of the materials is increased, thereby improving the accuracy of the obtained interest tags.

The following embodiments of the disclosure will explain the process of obtaining the training semantic vectors that include the interest tags by representing the features of the training materials using the semantic enhanced representation frame.

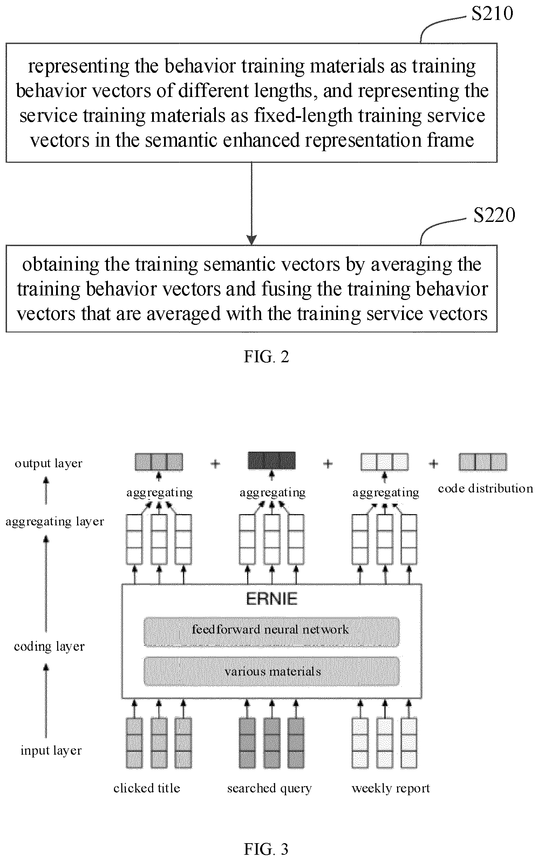

FIG. 2 is a flowchart of a method for determining training semantic vectors according to some embodiments of the disclosure. As illustrated in FIG. 2, the method includes the following.

At block S210, the behavior training materials are represented as training behavior vectors of different lengths, and the service training materials are represented as fixed-length training service vectors, in the semantic enhanced representation frame.

In the above embodiments, the training materials in the disclosure include the behavior training materials and the service training materials.

In some embodiments of the disclosure, the behavior training materials are represented in discriminative semantic vectors. For example, the behavior training materials similar to the interests are represented by semantic vectors at relatively short distances, and the behavior training materials dissimilar to the interests are represented by semantic vectors at relatively long distances, thus the training behavior vectors of different lengths are obtained. Other training materials are represented as fixed-length training service vectors, for example, service training materials. Semantic representations of service training materials are performed through the ERNIE, such as code distribution [0.9, 0.1, ...], where the dimension of the vector is equal to a number of programming languages, which can be set to 10 in the project.

At block S220, the training semantic vectors are obtained by averaging the training behavior vectors and fusing the training behavior vectors that are averaged with the training service vectors.

In some embodiments of the disclosure, the training behavior vectors of different lengths are averaged and then spliced with the training service vectors to obtain the training semantic vectors.

For example, FIG. 3 is a schematic diagram of a semantic vector representation according to some embodiments of the disclosure. As illustrated in FIG. 3, clicked titles, searched logs, and weekly reports are passing through the input layer, the encoding layer, and the aggregating layer. The output layer, after aggregation, outputs the semantic vectors that are represented by codes.

By splicing the training behavior vectors and the training service vectors in some embodiments of the disclosure, final training semantic vectors of fixed or reasonable length are obtained, which is beneficial to improve the generalization capability of the neural network model.

The social networks are coded based on the interests and idea similar to other interests that are socially connected to the interests. For example, a user who likes games is in social relation with other users who also like games. Encoding is performed on the basis of the determined semantic vectors to obtain encoding vectors. The following embodiments of the disclosure will explain the process of obtaining the training encoding vectors by aggregating the social networks into the training semantic vectors.

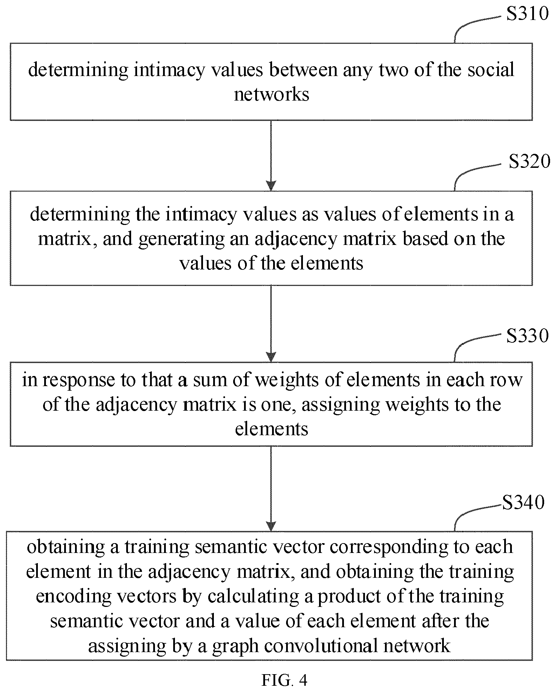

FIG. 4 is a flowchart of a method for determining training encoding vectors according to some embodiments of the disclosure. As illustrated in FIG. 4, the method further includes the following.

At block S310, intimacy values between any two of the social networks are obtained.

In some embodiments of the disclosure, the social networks may be social situations among the users, such as interaction situations among the users. The intimacy values between any two of the users may be calculated according to the intimacy values between any two of the social networks, and the intimacy value in the disclosure may also be referred to as intimacy. The range of the intimacy value can be (0~1.0). For example, the following expression is provided, score = (sigmoid (the number of recent communication days) + sigmoid (the number of recent communication times)) / 2.0.

At block S320, the intimacy values are determined as values of elements in a matrix, and an adjacency matrix is generated based on the values of the elements.

In some embodiments of the disclosure, for example, taking the user as an element of the matrix, according to the calculated intimacy values among the users, each row represents a user, each column represents other users socially connected to the user, the intimacy values are determined as values of elements in the matrix, and the adjacency matrix is generated based on the values of the elements and represented by A.

At block S330, in response to that a sum of weights of elements in each row of the adjacency matrix is one, weights are assigned to the elements.

Moreover, a weight assigned to each of elements arranged diagonally in the adjacency matrix is greater than weights assigned to other elements.

In some embodiments of the disclosure, based on its own information, a larger weight is assigned to each of elements arranged diagonally in the adjacency matrix, such as 5 to 10.0. Finally, the weight of the adjacency matrix is normalized by the following expression, so that the sum of weights of elements in each row is 1.

$$\widetilde{D}_{ii} = \sum_j \tilde{A}_{ij}$$

$$\hat{A} = \widetilde{D}^{-\frac{1}{2}} \tilde{A} \widetilde{D}^{-\frac{1}{2}}$$

where i represents the row in the adjacency matrix, j represents the column in the adjacency matrix, Â represents the adjacency matrix, and $\tilde{D}_{ii}$ represents the intimacy value. Moreover, ÂX represents the encoding vectors, Â represents the encoding vectors and X represents the vector matrix.

At block S340, a training semantic vector corresponding to each element in the adjacency matrix is obtained, and the training encoding vectors are obtained by calculating a product of the training semantic vector and a value of each element after the assigning by a graph convolutional network.

In some embodiments of the disclosure, on the basis of the generated adjacency matrix, based on the graph convolutional network, according to each intimacy value and the corresponding assigned weight in the adjacency matrix, the training encoding vectors are determined by calculating the product of the training semantic vector and the value of each element after the assigning by the graph convolutional network.

In the disclosure, a larger weight is assigned to each of elements arranged diagonally in the adjacency matrix, to make the vector sum generated after the encoding more biased towards the user's information. Moreover, the social relations are encoded, which solves the problem of cold start of the model, and even captures features without collected materials.

The following embodiments will explain the process of obtaining the tag recommendation model by training the double-layer neural network structure using the training encoding vectors as inputs and the interest tags as outputs.

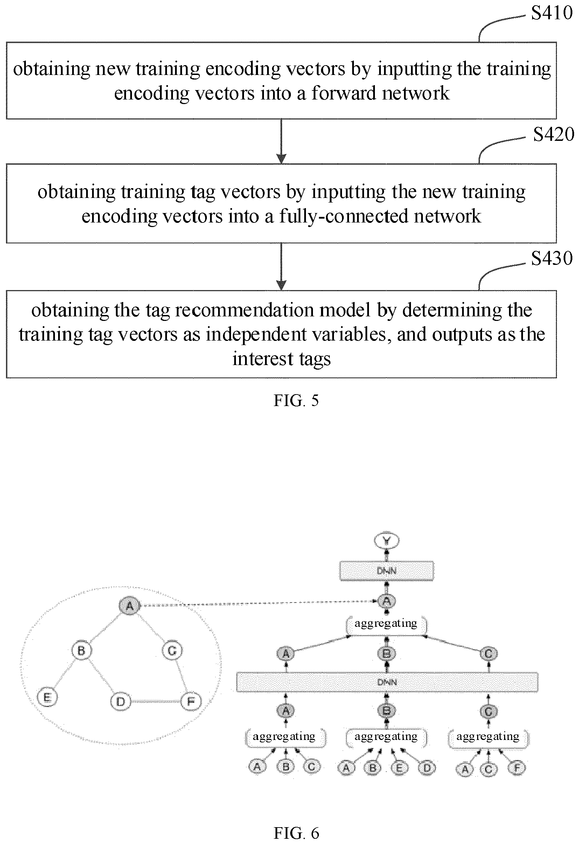

FIG. 5 is a flowchart of a method for training a model according to some embodiments of the disclosure. As illustrated in FIG. 5, the method includes the following.

At block S410, new training encoding vectors are obtained by inputting the training encoding vectors into a forward network.

In some embodiments of the disclosure, the disclosure adopts Relu as the activation function of the forward network, which is represented as ReLU(ÂX$W^0$), in which W° represents a fully-connected matrix of the neural network and parameters of the neural network, and the output new training encoding vectors are the training encoding vectors after aggregation.

In an exemplary embodiment of the disclosure, FIG. 6 is a schematic diagram of a neural network according to some embodiments of the disclosure. As illustrated in FIG. 6, A, B, C, D, E, and F represent different users. User A is in a social relation with user B and user C. User B is in a social relation with user A, user E, and user D. User C is in a social relation with user A and user F. Taking user A as the target user as an example, after the first aggregation of the training encoding vectors of user A, the training encoding vectors of user B who is in a social relation with user A, and the training encoding vectors of user C who is in a social relation with user A, according to the social relation, the training encoding vectors of user A are obtained, and also the training encoding vectors of user B and the training encoding vectors of user C are obtained after the aggregation.

At block S420, training tag vectors are obtained by inputting the new training encoding vectors into a fully-connected network.

In some embodiments of the disclosure, the new training encoding vectors ReLU(ÂX$W^0$) is used as the input of a second fully-connected network layer, the expression is expressed as AV$W^1$ and the output training tag vectors are written as Â ReLU(ÂX$W^0$)$W^1$ .

As illustrated in FIG. 6, the obtained training encoding vectors of user A after the aggregating, the obtained training encoding vectors of user B who is in a social relation with user A after the aggregating, and the obtained training encoding vectors of user C who is in a social relation with user A after the aggregating are input into the DNN fully-connected network $W^1$, to obtain new user training encoding vectors. For convenience of description, this disclosure marks ReLU(ÂX$W^0$) as V. The training encoding vectors of user A, user B, and user C are aggregated again, to obtain the training encoding vectors ReLU(ÂX$W^0$) as the inputs of the second layer neural network in the double-layer neural network, and then input into the fully-connected network of the neural network again. The expression is expressed as AV$W^1$, and the tag vectors Â ReLU(ÂX$W^0$)$W^1$ are obtained, that is, Y in FIG. 6.

It should be understood that the encoding vectors after the aggregating are multi-dimensional vectors, for example, a 100-dimensional vector that maps 100 tags, that is, each dimension represents a tag.

The disclosure adopts a double-layer neural network structure, to increases the user materials through the user's social relations, and expand the collection range of user materials, thereby avoiding the problem of overfitting.

At block S430, the tag recommendation model is obtained by determining the training tag vectors as independent variables, and outputs as the interest tags.

In some embodiments of the disclosure, the training tag vectors are parsed by a function acting on the training tag vectors, and the training interest tags are output. The tag recommendation model is determined by calculating the relation between the training interest tag and the actual interest tag.

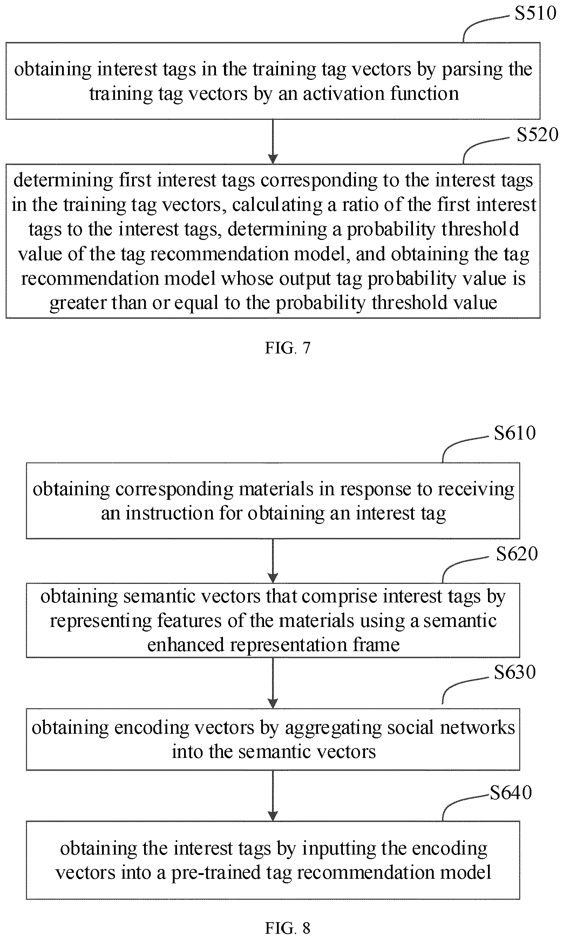

FIG. 7 is a flowchart of a method for training a tag recommendation model according to some embodiments of the disclosure. As illustrated in FIG. 7, the method further includes the following.

At block S510, interest tags in the training tag vectors are obtained by parsing the training tag vectors by an activation function.

In some embodiments of the disclosure, the activation function acting on the training tag vector is determined. The activation function may be a sigmoid function. The obtained training tag vectors are taken as independent variables of the activation function, and the training tag vectors are analyzed by the activation function to obtain multiple tags, i.e., training interest tags.

At blocks S520, first interest tags corresponding to the interest tags in the training tag vectors are determined, a ratio of the first interest tags to the interest tags is calculated, a probability threshold value of the tag recommendation model is determined, and the tag recommendation model whose output tag probability value is greater than or equal to the probability threshold value is obtained.

In some embodiments of the disclosure, a probability of a number of occurrence of each tag in the plurality of tags to a number of occurrence of all tags is calculated. Moreover, a probability of a number of occurrence of first interest tags corresponding to the interest tags to a number of occurrence of all tags is calculated to determine a probability threshold value of the tag recommendation model, so that the tag recommendation model whose output tag probability value is greater than or equal to the probability threshold value is obtained.

Based on the same/similar concept, the disclosure also provides a method for obtaining a tag.

FIG. 8 is a flowchart of a method for obtaining a tag according to some embodiments of the disclosure. As illustrated in FIG. 8, the method further includes the following blocks.

At block S610, corresponding materials are obtained in response to receiving an instruction for obtaining an interest tag.

In some embodiments of the disclosure, if the instruction for obtaining an interest tag is received, the materials corresponding to the instruction is obtained. As in the above embodiments, the materials include behavior materials and service materials.

At block S620, semantic vectors that include interest tags are obtained by representing features of the materials using a semantic enhanced representation frame.

In some embodiments of the disclosure, the semantic enhanced representation frame is used to represent the obtained behavior materials and service materials, to obtain behavior vectors and service vectors including the interest tags.

At block S630, encoding vectors are obtained by aggregating social networks into the semantic vectors.

In some embodiments of the disclosure, the behavior vectors and the service vectors are fused according to the method provided in the above embodiments, and the graph convolution network is used to encode the semantic vectors that are in social relation with each other. According to the definitions of the graph convolution network, the encoding vectors can represent the user, and then the encoding vectors of the user = Σ intimacy * employee and friend vectors, that is, ÂX, X represents the user's vector matrix, and one row represents one user.

The obtained semantic vectors are integrated into the semantic vectors through the obtained adjacency matrix to obtain the encoding vectors.

At block S640, the interest tags are obtained by inputting the encoding vectors into a pre-trained tag recommendation model.

In some embodiments of the disclosure, the obtained encoding vectors are input into the trained tag recommendation model, and the tag recommendation model outputs the interest tags. In this way, the user's interest tags are obtained.

Through the method for obtaining a tag provided by the disclosure, the user's interest tags can be accurately obtained, so that relevant materials can be recommended accurately.

In the disclosure, the steps of using the tag recommendation model are described in the following embodiments.

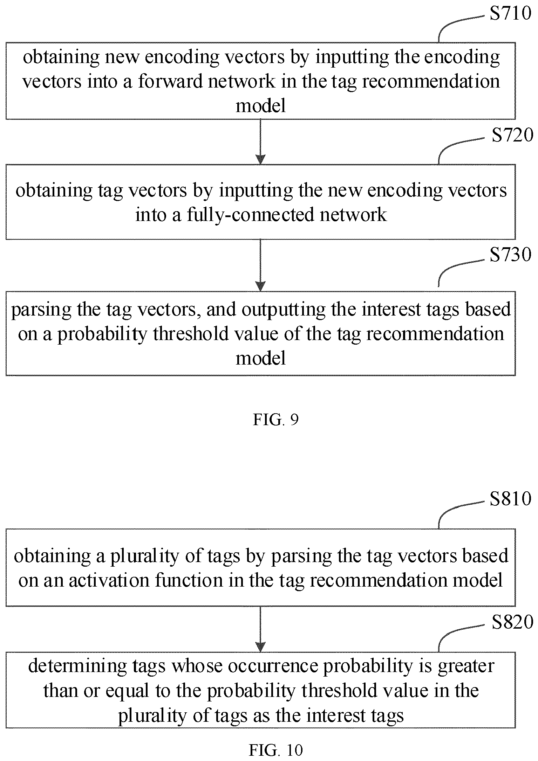

FIG. 9 is a flowchart of a method for using a tag recommendation model according to some embodiments of the disclosure. As illustrated in FIG. 9, the method further includes the following.

At block S710, new encoding vectors are obtained by inputting the encoding vectors into a forward network in the tag recommendation model.

In some embodiments of the disclosure, the encoding vectors are obtained according to the method for determining the training encoding vectors, and the encoding vectors are input into the forward network in the tag recommendation model, so that the new encoding vectors are obtained through the fully-connected network of the current layer of the model.

At block S720, tag vectors are obtained by inputting the new encoding vectors into a fully-connected network.

In some embodiments of the disclosure, the new encoding vectors are input into the fully-connected network of the second layer in the tag recommendation model to obtain the tag vectors.

For example, the tag vectors include features of the user, such as deep learning, architecture technology, cloud computing, and natural language processing.

At block S730, the tag vectors are parsed, and the interest tags are output based on a probability threshold value of the tag recommendation model.

In some embodiments of the disclosure, the tag vectors are parsed by using sigmoid as the activation function. The interest tags corresponding to the features are obtained from the features in the tag vectors, and the interest tags of the user are determined from the obtained interest tags.

For example, multiple features can correspond to one interest tag. For example, features such as text classification, TF-IDF and ONE-HOT can all correspond to the tag of "natural language processing".

The following embodiments will explain the process of parsing the tag vectors, and outputting the interest tags based on the probability threshold value of the tag recommendation model.

FIG. 10 is a flowchart of a method for obtaining a tag according to some embodiments of the disclosure. As illustrated in FIG. 10, the method further includes the following.

At block S810, a plurality of tags are obtained by parsing the tag vectors based on an activation function in the tag recommendation model.

According to the above embodiments, the tag vectors are expressed as $\hat{A}$ ReLU($\hat{A}XW^0$)$W^1$. The analyzing function is Z=sigmoid(R), that is,

$$Z = \mathrm{sigmoid}(\hat{A} \ \mathrm{ReLU}(\hat{A}XW^0)W^1)$$

Z represents the prediction interest tags, and the plurality of tags are obtained.

At block S820, tags whose occurrence probability is greater than or equal to the probability threshold value in the plurality of tags are determined as the interest tags.

In some embodiments of the disclosure, a probability of a number of occurrence of each interest tag in the plurality of interest tags to a number of occurrence of all interest tags is calculated, and the interest tag whose occurrence probability is greater than or equal to the probability threshold value is determined as the interest tag of the user.

For example, if the probability threshold value is 0.5, the tag whose prediction value is greater than 0.5 in the parsed dimension results is determined as the interest tag of the user.

In some embodiments of the disclosure, the method can be applied to a variety of different scenarios, especially for internal knowledge management, such as office scenarios of enterprises. The disclosure takes the office scenarios of enterprises as an example, but is not limited to this scene.

In the office scenarios of enterprises, interests can be divided into three categories: skills, services, and professions. Skills refer to knowledge classification systems, such as deep learning, architecture technology, cloud computing, and natural language processing. Services refer to products or projects that employees participate in, such as application A and application B. Professions, also known as sequences, represent the roles of users. The professions can be specifically divided into Research and Development engineer (RD), Quality Assurance (QA), PM, operator (OP), and administrator. The object of the disclosure is to predict an accurate interest profile for each user, for example, the tags of user A are: path planning, map technology, and RD

The method of the disclosure can also be applied to internal knowledge recommendation and product search to achieve the individual effect for different person and accurate search effect. Firstly, in the knowledge recommendation product, with the help of the interest tags of the user profile, the user's preferences can be accurately learned, so that articles and videos of interest can be recommended to the user. Compared with tags based only on population attributes, interest tags can describe a wider range and better reflect personal preferences of the users, so the recommendation effect is better. Since the user is associated with product/item, when searching for the product/item, the structured information of relevant people can be directly returned, so that the user can obtain the information of relevant people more quickly, thereby reducing the search cost. Therefore, accurate user profile prediction is conducive to improving the experience of downstream products, such as recommendation and search.

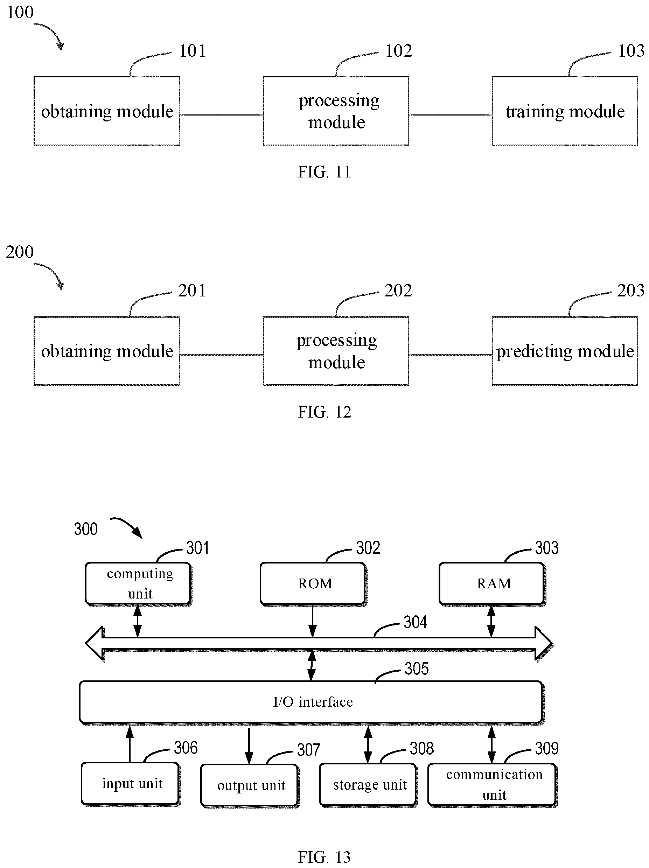

Based on the same principle as the method shown in FIG. 1, FIG. 11 is a schematic diagram of an apparatus for training a tag recommendation model according to some embodiments of the disclosure. As illustrated in FIG. 11, the apparatus 100 may include an obtaining module 101, a processing module 102, and a training module 103. The obtaining module 101 is configured to collect training materials that include interest tags in response to receiving an instruction for collecting training materials. The processing module 102 is configured to obtain training semantic vectors that include the interest tags by representing features of the training materials using a semantic enhanced representation frame, and obtain training encoding vectors by aggregating social networks into the training semantic vectors. The training module 103 is configured to obtain a tag recommendation model by training a double-layer neural network structure using the training encoding vectors as inputs and the interest tags as outputs.

In some embodiments of the disclosure, the training materials include behavior training materials and service training materials.

The processing module 102 is configured to: represent the behavior training materials as training behavior vectors of different lengths, and represent the service training materials as fixed-length training service vectors, in the semantic enhanced representation frame; and obtain the training semantic vectors by averaging the training behavior vectors and fusing the training behavior vectors that are averaged with the training service vectors.

The processing module 102 is further configured to: determine intimacy values between any two of the social networks; determine the intimacy values as values of elements in a matrix, and generate an adjacency matrix based on the values of the elements; in response to that a sum of weights of elements in each row of the adjacency matrix is one, assign weights to the elements, wherein a weight assigned to each of elements arranged diagonally in the adjacency matrix is greater than weights assigned to other elements; and obtain a training semantic vector corresponding to each element in the adjacency matrix, and obtain a training semantic vector corresponding to each element in the adjacency matrix, and obtaining the training encoding vectors by calculating a product of the training semantic vector and a value of each element after the assigning by a graph convolutional network.

The training module 103 is further configured to: obtain new training encoding vectors by inputting the training encoding vectors into a forward network; obtain training tag vectors by inputting the new training encoding vectors into a fully-connected network; and obtain the tag recommendation model by determining the training tag vectors as independent variables, and outputs as the interest tags.

The training module 103 is further configured to: obtain interest tags in the training tag vectors by parsing the training tag vectors by an activation function; and determine first interest tags corresponding to the interest tags in the training tag vectors, calculate a ratio of the first interest tags to the interest tags, determine a probability threshold value of the tag recommendation model, and obtain the tag recommendation model whose output tag probability value is greater than or equal to the probability threshold value.

Based on the same principle as the method shown in FIG. 8, FIG. 12 is a schematic diagram of an apparatus for obtaining a tag according to some embodiments of the disclosure. As shown in FIG. 12, the apparatus 200 for obtaining a tag may include an obtaining module 201, a processing module 202, and a predicting module 203. The obtaining module 210 is configured to obtain corresponding materials in response to receiving an instruction for obtaining an interest tag. The processing module 202 is configured to obtain semantic vectors that include interest tags by representing features of the materials using a semantic enhanced representation frame, and obtain encoding vectors by aggregating social networks into the semantic vectors. The predicting module 203 is configured to obtain the interest tags by inputting the encoding vectors into a pre-trained tag recommendation model.

The predicting module 203 is further configured to: obtain new encoding vectors by inputting the encoding vectors into a forward network in the tag recommendation model; obtain tag vectors by inputting the new encoding vectors into a fully-connected network; and parse the tag vectors, and output the interest tags based on a probability threshold value of the tag recommendation model.

The predicting module 203 is further configured to: obtain a plurality of tags by parsing the tag vectors based on an activation function in the tag recommendation model; and determine tags whose occurrence probability is greater than or equal to the probability threshold value in the plurality of tags as the interest tags.

In the technical solutions of the disclosure, collection, storage and application of the user's personal information involved are all in compliance with relevant laws and regulations, and do not violate public order and good customs.

According to embodiments of the disclosure, the disclosure provides an electronic device, and a readable storage medium, and a computer program product.

FIG. 13 is a block diagram of an example electronic device 300 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 13, the electronic device 300 includes: a computing unit 301 performing various appropriate actions and processes based on computer programs stored in a read-only memory (ROM) 302 or computer programs loaded from the storage unit 308 to a random access memory (RAM) 303. In the RAM 303, various programs and data required for the operation of the device 300 are stored. The computing unit 301, the ROM 302, and the RAM 303 are connected to each other through a bus 304. An input/output (I/O) interface 305 is also connected to the bus 304.

Components in the device 300 are connected to the I/O interface 305, including: an inputting unit 306, such as a keyboard, a mouse; an outputting unit 307, such as various types of displays, speakers; a storage unit 308, such as a disk, an optical disk; and a communication unit 309, such as network cards, modems, and wireless communication transceivers. The communication unit 309 allows the device 300 to exchange information/data with other devices through a computer network such as the Internet and/or various telecommunication networks.

The computing unit 301 may be various general-purpose and/or dedicated processing components with processing and computing capabilities. Some examples of computing unit 301 include, but are not limited to, a CPU, a graphics processing unit (GPU), various dedicated AI computing chips, various computing units that run machine learning model algorithms, and a digital signal processor (DSP), and any appropriate processor, controller and microcontroller. The computing unit 301 executes the various methods and processes described above, such as the method for training a tag recommendation model and a method for obtaining a tag. For example, in some embodiments, the above method may be implemented as a computer software program, which is tangibly contained in a machine-readable medium, such as the storage unit 308. In some embodiments, part or all of the computer program may be loaded and/or installed on the device 300 via the ROM 302 and/or the communication unit 309. When the computer program is loaded on the RAM 303 and executed by the computing unit 301, one or more steps of the methods described above may be executed. Alternatively, in other embodiments, the computing unit 301 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage medium include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server can be a cloud server, a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those of ordinary skill in the art should understand that various modifications, combinations, sub-combinations and substitutions can be made according to design requirements and other factors.

**Claims**

1. A method for training a tag recommendation model, comprising:

   collecting (S110) training materials that comprise interest tags in response to receiving an instruction for collecting training materials;
   obtaining (S120) training semantic vectors that comprise the interest tags by representing features of the training materials using a semantic enhanced representation frame;
obtaining (S130) training encoding vectors by aggregating social networks into the training semantic vectors; and
obtaining (S140) a tag recommendation model by training a double-layer neural network structure using the training encoding vectors as inputs and the interest tags as outputs.

2.  The method of claim 1, wherein,

    the training materials comprise behavior training materials and service training materials; and
    obtaining (S120) the training semantic vectors that comprise the interest tags by representing the features of the training materials using the semantic enhanced representation frame, comprises:

        representing (S210) the behavior training materials as training behavior vectors of different lengths, and representing the service training materials as fixed-length training service vectors, in the semantic enhanced representation frame; and
        obtaining (S220) the training semantic vectors by averaging the training behavior vectors and fusing the training behavior vectors that are averaged with the training service vectors.

3.  The method of claim 1 or 2, wherein obtaining (S130) the training encoding vectors by aggregating the social networks into the training semantic vectors, comprises:

        determining (S310) intimacy values between any two of the social networks;
        determining (S320) the intimacy values as values of elements in a matrix, and generating an adjacency matrix based on the values of the elements;
        in response to that a sum of weights of elements in each row of the adjacency matrix is one, assigning (S330) weights to the elements, wherein a weight assigned to each of elements arranged diagonally in the adjacency matrix is greater than weights assigned to other elements; and
        obtaining (S340) a training semantic vector corresponding to each element in the adjacency matrix, and obtaining the training encoding vectors by calculating a product of the training semantic vector and a value of each element after the assigning by a graph convolutional network.

4.  The method of any one of claims 1 to 3, wherein obtaining (S140) the tag recommendation model by training the double layer neural network structure using the training encoding vectors as the inputs and the interest tags as the outputs, comprises:

        obtaining (S410) new training encoding vectors by inputting the training encoding vectors into a forward network;
        obtaining (S420) training tag vectors by inputting the new training encoding vectors into a fully-connected network; and
        obtaining (S430) the tag recommendation model by determining the training tag vectors as independent variables, and outputs as the interest tags.

5.  The method of claim 4, wherein obtaining (S430) the tag recommendation model by determining the training tag vectors as the independent variables, and the outputs as the interest tags, comprises:

        obtaining (S510) interest tags in the training tag vectors by parsing the training tag vectors by an activation function; and
        determining (S520) first interest tags corresponding to the interest tags in the training tag vectors, calculating a ratio of the first interest tags to the interest tags, determining a probability threshold value of the tag recommendation model, and obtaining the tag recommendation model whose output tag probability value is greater than or equal to the probability threshold value.

6.  A method for obtaining a tag, comprising:

        obtaining (S610) corresponding materials in response to receiving an instruction for obtaining an interest tag;
        obtaining (S620) semantic vectors that comprise interest tags by representing features of the materials using a semantic enhanced representation frame;
        obtaining (S630) encoding vectors by aggregating social networks into the semantic vectors; and
        obtaining (S640) the interest tags by inputting the encoding vectors into a pre-trained tag recommendation model.

7.  The method of claim 6, wherein obtaining (S640) the interest tags by inputting the encoding vectors into the pre-trained tag recommendation model, comprises:

        obtaining (S710) new encoding vectors by inputting the encoding vectors into a forward network in the tag recommendation model;
        obtaining (S720) tag vectors by inputting the new encoding vectors into a fully-connected network; and

parsing (S730) the tag vectors, and outputting the interest tags based on a probability threshold value of the tag recommendation model.

8. The method of claim 7, wherein parsing (S730) the tag vectors, and outputting the interest tags based on the probability threshold value of the tag recommendation model, comprises:

obtaining (S810) a plurality of tags by parsing the tag vectors based on an activation function in the tag recommendation model; and
determining (S520) tags whose occurrence probability is greater than or equal to the probability threshold value in the plurality of tags as the interest tags.

9. An apparatus for training a tag recommendation model, comprising:

an obtaining module (101), configured to collect training materials that comprise interest tags in response to receiving an instruction for collecting training materials;
a processing module (102), configured to obtain training semantic vectors that comprise the interest tags by representing features of the training materials using a semantic enhanced representation frame, and obtain training encoding vectors by aggregating social networks into the training semantic vectors; and
a training module (103), configured to obtain a tag recommendation model by training a double-layer neural network structure using the training encoding vectors as inputs and the interest tags as outputs.

10. The apparatus of claim 9, wherein the training materials comprise behavior training materials and service training materials, and the processing module (102) is configured to:

represent the behavior training materials as training behavior vectors of different lengths, and represent the service training materials as fixed-length training service vectors, in the semantic enhanced representation frame; and
obtain the training semantic vectors by averaging the training behavior vectors and fusing the training behavior vectors that are averaged with the training service vectors.

11. The apparatus of claim 9 or 10, wherein the processing module (102) is further configured to:

determine intimacy values between any two of the social networks;
determine the intimacy values as values of elements in a matrix, and generate an adjacency matrix based on the values of the elements;
in response to that a sum of weights of elements in each row of the adjacency matrix is one, assign weights to the elements, wherein a weight assigned to each of elements arranged diagonally in the adjacency matrix is greater than weights assigned to other elements; and
obtain a training semantic vector corresponding to each element in the adjacency matrix, and obtaining the training encoding vectors by calculating a product of the training semantic vector and a value of each element after the assigning by a graph convolutional network.

12. The apparatus of any one of claims 9 to 10, wherein the training module (104) is further configured to:

obtain new training encoding vectors by inputting the training encoding vectors into a forward network;
obtain training tag vectors by inputting the new training encoding vectors into a fully-connected network; and
obtain the tag recommendation model by determining the training tag vectors as independent variables, and outputs as the interest tags.

13. An apparatus for obtaining a tag, comprising:

an obtaining module (201), configured to obtain corresponding materials in response to receiving an instruction for obtaining an interest tag;
a processing module (202), configured to obtain semantic vectors that comprise interest tags by representing features of the materials using a semantic enhanced representation frame, and obtain encoding vectors by aggregating social networks into the semantic vectors; and
a predicting module (203), configured to obtain the interest tags by inputting the encoding vectors into a pre-trained tag recommendation model.

14. An electronic device, comprising:

a processor; and
a memory communicatively coupled to the processor; wherein,
the memory stores instructions executable by the at least one processor, when the instructions are executed by the at least one processor, the at least one processor is caused to implement the method of any one of claims 1-5 or the method of any one of claims 6-8.

**15.** A non-transitory computer-readable storage medium having computer instructions stored thereon, wherein the computer instructions are configured to cause a computer to implement the method of any one of claims 1-5 or the method of any one of claims 6-8.

S110

collecting training materials that comprise interest
tags in response to receiving an instruction for
collecting training materials

S120

obtaining training semantic vectors that comprise
the interest tags by representing features of the
training materials using a semantic enhanced
representation frame

S130

obtaining training encoding vectors by aggregating
social networks into the training semantic vectors

S140

obtaining a tag recommendation model by training a
double-layer neural network structure using the
training encoding vectors as inputs and the interest
tags as outputs

FIG. 1

S210

representing the behavior training materials as training behavior vectors of different lengths, and representing the service training materials as fixed-length training service vectors in the semantic enhanced representation frame

S220

obtaining the training semantic vectors by averaging the training behavior vectors and fusing the training behavior vectors that are averaged with the training service vectors

FIG. 2

output layer

aggregating    aggregating    aggregating    code distribution

aggregating layer

coding layer

ERNIE

feedforward neural network

various materials

input layer

clicked title    searched query    weekly report

FIG. 3

S310

determining intimacy values between any two of the social networks

S320

determining the intimacy values as values of elements in a matrix, and generating an adjacency matrix based on the values of the elements

S330

in response to that a sum of weights of elements in each row of the adjacency matrix is one, assigning weights to the elements

S340

obtaining a training semantic vector corresponding to each element in the adjacency matrix, and obtaining the training encoding vectors by calculating a product of the training semantic vector and a value of each element after the assigning by a graph convolutional network

FIG. 4

S410

obtaining new training encoding vectors by inputting the training encoding vectors into a forward network

S420

obtaining training tag vectors by inputting the new training encoding vectors into a fully-connected network

S430

obtaining the tag recommendation model by determining the training tag vectors as independent variables, and outputs as the interest tags

FIG. 5

FIG. 6

S510

obtaining interest tags in the training tag vectors by parsing the training tag vectors by an activation function

S520

determining first interest tags corresponding to the interest tags in the training tag vectors, calculating a ratio of the first interest tags to the interest tags, determining a probability threshold value of the tag recommendation model, and obtaining the tag recommendation model whose output tag probability value is greater than or equal to the probability threshold value

FIG. 7

S610

obtaining corresponding materials in response to receiving an instruction for obtaining an interest tag

S620

obtaining semantic vectors that comprise interest tags by representing features of the materials using a semantic enhanced representation frame

S630

obtaining encoding vectors by aggregating social networks into the semantic vectors

S640

obtaining the interest tags by inputting the encoding vectors into a pre-trained tag recommendation model

FIG. 8

S710

obtaining new encoding vectors by inputting the encoding vectors into a forward network in the tag recommendation model

S720

obtaining tag vectors by inputting the new encoding vectors into a fully-connected network

S730

parsing the tag vectors, and outputting the interest tags based on a probability threshold value of the tag recommendation model

FIG. 9

S810

obtaining a plurality of tags by parsing the tag vectors based on an activation function in the tag recommendation model

S820

determining tags whose occurrence probability is greater than or equal to the probability threshold value in the plurality of tags as the interest tags

FIG. 10

100

101 obtaining module

102 processing module

103 training module

FIG. 11

200

201 obtaining module

202 processing module

203 predicting module

FIG. 12

300

301 computing unit

302 ROM

303 RAM

304

305 I/O interface

306 input unit

307 output unit

308 storage unit

309 communication unit

FIG. 13